# EUROPEAN PATENT APPLICATION

(11) **EP 2 595 344 A2**
(43) Date of publication of application: **22.05.2013**
(21) Application number: 12192411.2
(22) Date of filing: 13.11.2012
(51) Int. Cl.: H04L 12/42, H04L 12/437

(54) **Method, apparatus, and system for detecting connectivity in a multi-protocol label switching ring network**

(30) Priority: 17.11.2011 CN 201110365823
(71) Applicant: Huawei Technologies Co., Ltd., Longgang District, Shenzhen Guangdong 518129 (CN)
(72) Inventor: Sha, Li, 518129 Shenzhen (CN); Ban, Ling, 518129 Shenzhen (CN); Ren, Jinyong, 518129 Shenzhen (CN); Li, Huisheng, 518129 Shenzhen (CN)
(74) Representative: Epping - Hermann - Fischer

(57) **Abstract**

Embodiments of the present invention disclose a method, an apparatus, and a system for detecting a multi-protocol label switching ring network. The method includes: initiating, by a ring ingress node, a detection request packet; determining a ring label switched path LSP forwarding equivalence class FEC corresponding to the detection request packet, and encapsulating the ring LSP FEC into the detection request packet; sending the detection request packet after encapsulation to a ring egress node; and determining whether a detection reply packet sent by the ring egress node is received; if yes, determining that the ring LSP is connected; otherwise, determining that the ring LSP is not connected. Therefore, the embodiments of the present invention are able to directly detect connectivity of a ring LSP, solving the problem in the prior art where an interference exists during detection of the ring LSP connectivity.

## Description

### FIELD OF THE INVENTION

The present invention relates to the field of network technology, and in particular, to a method, an apparatus, and a system for detecting a multi-protocol label switching ring network.

### BACKGROUND OF THE INVENTION

Multi-protocol label switching (Multi-Protocol Label Switching, MPLS for short) is a system for quickly switching and routing data packets. It provides capabilities such as targeting, routing, forwarding, and switching for network data stream. In MPLS, data transmission occurs in the label switched path (Label Switched Path, LSP for short). An MPLS ring network is an MPLS LSP transport ring network constructed by means of logical structure mapping, where a group of nodes form a closed ring, each node is connected through a bidirectional communication facility to two adjacent nodes, each node in the ring may serve as a ring ingress node or may also serve as a ring egress node, and the transport directions are opposite. Each direction includes working and protective ring channels, and provides redundant bandwidth or redundant network devices or both. In this manner, after the network becomes invalid or deteriorates, distributed services are able to automatically recover. To be simple, in the MPLS ring network scenario, paths are rings, and services may be transferred clockwise or counterclockwise. That is, two paths are able to protect each other. If a path in one direction is interrupted, the protective path in the opposite direction continues to transfer services to meet the objective that single-point link faults in a ring do not affect services.

As the MPLS transport ring network carries huge service traffic, it is important to detect connectivity of the ring LSP. In the prior art, the connectivity of the ring LSP is detected by detecting the traffic carried in the ring LSP.

The connectivity of the ring LSP is detected by detecting the traffic carried in the ring LSP in the prior art. The detection result thereby obtained is the result under the combined effect of the carried traffic and ring LSP, and interference exists between both, so that the connectivity of the ring LSP fails to be accurately reflected.

### SUMMARY OF THE INVENTION

Embodiments of the present invention provide a method, an apparatus, and a system for detecting a multi-protocol label switching ring network, which are used to solve the problem in the detection method in the prior art where connectivity of a ring LSP fails to be accurately reflected.

In one aspect, an embodiment of the present invention provides a method for detecting a multi-protocol label switching ring network, which includes:
initiating, by a ring ingress node, a detection request packet;
determining a ring label switched path LSP forwarding equivalence class FEC corresponding to the detection request packet, and encapsulating the ring LSP FEC into the detection request packet;
sending the detection request packet after encapsulation to a ring egress node; and
determining whether a detection reply packet sent by the ring egress node is received; if yes, determining that the ring LSP is connected; otherwise, determining that the ring LSP is not connected.

An embodiment of the present invention further provides a method for detecting a multi-protocol label switching ring network, which includes:
initiating, by a ring ingress node, a fault detection request packet with incremental time to live TTL;
determining a ring LSP FEC corresponding to the fault detection request packet, and encapsulating the ring LSP FEC into the fault detection request packet;
respectively sending the fault detection request packet after encapsulation with incremental TTL to downstream nodes, where the downstream nodes include all intermediate nodes between the ring ingress node and a ring egress node, and the ring egress node; and
if no fault detection reply packet returned by a downstream node is received, determining that the downstream node is a faulty node.

In another aspect, an embodiment of the present invention further provides an apparatus for detecting a multi-protocol label switching ring network, which includes:
a first initiating module, configured to initiate a detection request packet;
a first encapsulating module, configured to determine a ring label switched path LSP forwarding equivalence class FEC corresponding to the detection request packet, and encapsulate the ring LSP FEC into the detection request packet;
a first sending module, configured to send the detection request packet after encapsulation to a ring egress node; and
a first detecting module, configured to determine whether a detection reply packet sent by the ring egress node is received; if yes, determine that the ring LSP is connected; otherwise, determine that the ring LSP is not connected.

An embodiment of the present invention further provides an apparatus for detecting a multi-protocol label switching ring network, which includes:
a second initiating module, configured to initiate a fault detection request packet with incremental time to live TTL;
a second encapsulating module, configured to determine a ring LSP FEC corresponding to the fault detection request packet, and encapsulate the ring LSP FEC into the fault detection request packet;
a second sending module, configured to respectively send the fault detection request packet after encapsulation with incremental TTL to downstream nodes, where the downstream nodes include all intermediate nodes between a ring ingress node and a ring egress node, and the ring egress node; and
a second detecting module, configured to: if no fault detection reply packet returned by a downstream node is received, determine that the downstream node is a faulty node.

In another aspect, an embodiment of the present invention further provides a system for detecting a multi-protocol label switching ring network, which includes: a ring ingress node, and a ring egress node that communicates with the ring ingress node;
where, the ring ingress node uses the apparatus for detecting a multi-protocol label switching ring network; and
the ring egress node is configured to: receive a detection request packet after encapsulation sent by the ring ingress node, and determine, according to a ring identity included in the detection request packet, whether a ring LSP is a ring LSP corresponding to the ring identity; if yes, further determine, according to a ring egress address included in the detection request packet, whether the ring egress node is a ring egress node corresponding to the ring egress address; if yes, encapsulate the ring LSP FEC into a detection reply packet, and send the detection reply packet after encapsulation to the ring ingress node.

At least one of the multiple preceding technical solutions has the following advantages or beneficial effects:
Embodiments of the present invention use the following technical means to determine whether a ring LSP is connected: A ring ingress node encapsulates an extended ring LSP FEC into a detection request packet, and sends the detection request packet after encapsulation to a ring egress node, so that the ring egress node returns a detection reply packet; if the ring ingress node receives a detection reply packet, it is determined that the ring LSP is connected; otherwise, it is determined that the ring LSP is not connected. Therefore, the problem of failing to accurately reflect connectivity of a ring LSP according to a detection method in the prior art is solved, and the connectivity of the ring LSP is able to be directly detected.

### BRIEF DESCRIPTION OF THE DRAWINGS

To better illustrate the present invention or technical solution by using the existing technologies, the drawings that need to be used in the present invention or the description of existing technologies are presented in embodiments of the present invention. It is understandable that the drawings merely provide several applications of the present invention. Those skilled in the art can obtain other drawings based on these drawings without innovative work.
FIG. 1 is a schematic flowchart of a method for detecting a multi-protocol label switching ring network according to a first embodiment of the present invention;
FIG. 2 is a schematic flowchart of a method for detecting a multi-protocol label switching ring network according to a second embodiment of the present invention;
FIG. 3 is a system architecture diagram of a multi-protocol label switching ring network to which an embodiment of the present invention is specifically applied;
FIG. 4 is a schematic flowchart of a method for detecting a multi-protocol label switching ring network according to a third embodiment of the present invention;
FIG. 5 is a schematic flowchart of a method for detecting a multi-protocol label switching ring network according to a fourth embodiment of the present invention;
FIG. 6 is a schematic structural diagram of an apparatus for detecting a multi-protocol label switching ring network according to a fifth embodiment of the present invention;
FIG. 7 is a schematic structural diagram of an apparatus for detecting a multi-protocol label switching ring network according to a sixth embodiment of the present invention;
FIG. 8 is a schematic structural diagram of an apparatus for detecting a multi-protocol label switching ring network according to a seventh embodiment of the present invention;
FIG. 9 is a schematic structural diagram of an apparatus for detecting a multi-protocol label switching ring network according to an eighth embodiment of the present invention; and
FIG. 10 is a schematic structural diagram of an apparatus for detecting a multi-protocol label switching ring network according to a ninth embodiment of the present invention.

### DETAILED DESCRIPTION OF THE EMBODIMENTS

To clarify the purpose, technical scheme, and advantages of the embodiments of the present invention, the embodiments of the present invention are described with drawings clearly and completely. Evidently, the embodiments described below are for the exemplary purpose only, without covering all embodiments of the present invention. Those skilled in the art are able to derive other embodiments from the embodiments given herein without making any creative effort, and all such embodiments are covered in the protection scope of the present invention.

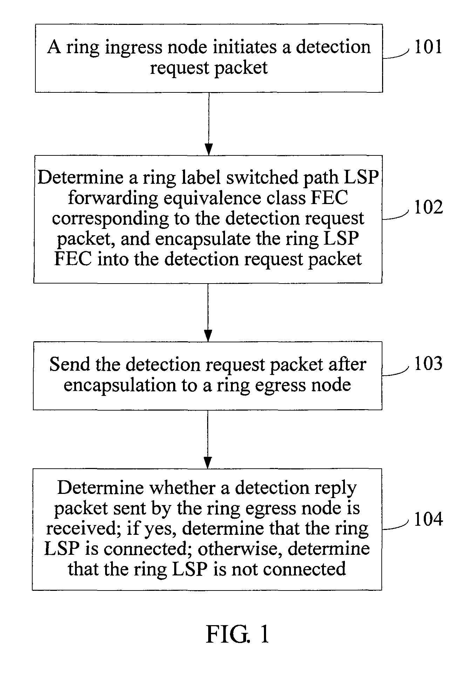

In light of the problem that exists in the prior art, an embodiment of the present invention defines a ring LSP forwarding equivalence class FEC (Forwarding Equivalence Class, FEC for short), and encapsulates the defined ring LSP FEC into a detection request packet. A ring ingress node sends the detection request packet after encapsulation to a ring egress node, so that the ring egress node returns a detection reply packet to the ring ingress node. If the ring ingress node does not receive the detection reply packet, it is determined that the ring LSP has a fault, thereby solving the problem in the prior art where interference exists during connectivity detection of the ring LSP. Specifically, the embodiment of the present invention may be realized by using a method shown in FIG. 1.

FIG. 1 is a schematic flowchart of a method for detecting a multi-protocol label switching ring network according to a first embodiment of the present invention. As shown in FIG. 1, the method includes the following:
101: A ring ingress node initiates a detection request packet.

As an example, the ring ingress node initiates the detection request packet when receiving a label switching ring network detection command. The label switching ring network detection command may include, for example, a ring egress node address, a ring identity, and a ring direction. The ring direction includes a clockwise direction of the ring and a counterclockwise direction of the ring. The ring identity is used to determine a detected ring LSP.

102: Determine a ring LSP forwarding equivalence class FEC corresponding to the detection request packet, and encapsulate the ring LSP FEC into the detection request packet.

In MPLS, packets that have the same forwarding processing method are grouped into one group, which is called forwarding equivalence class FEC. That is, packets that have the same forwarding equivalence class will undergo exactly the same processing in the MPLS network. The ring ingress node in this embodiment of the present invention determines, according to the ring ingress node address, and the ring egress node address, the ring direction, and the ring identity included in the label switching ring network detection command, the ring LSP FEC corresponding to the detection request packet. The ring LSP FEC refers to a set of packets undergoing the same forwarding processing on the same ring LSP. That is, packets that have the same ring LSP forwarding processing method have the same ring LSP FEC.

The LSP FEC type length value (Type-Length-Value, TLV for short) in the prior art includes only a ring egress node address. Therefore, a ring LSP FEC corresponding to the detection request packet of the ring LSP according to the embodiment of the present invention does not exist. In order that connectivity of the ring LSP may be directly detected by using the ring LSP detection request packet, the embodiment of the present invention uses the extended ring LSP FEC TLV. The structure of the value (Value) part of this TLV is shown as follows:

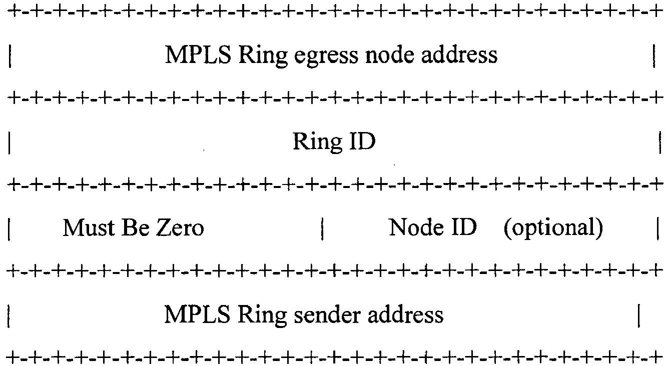

The meaning of each parameter is as follows:

Ring ID refers to a ring identity, and is used to determine a detected ring LSP. The ring identity in the MPLS ring network is unique. That is, every ring LSP is unique.

MPLS Ring egress node address refers to a ring egress node address, which is normally an LSR (Label Switching Router, label switching router) identity of the ring egress node.

MPLS Ring sender address refers to a ring ingress node address, which is normally an LSR identity of the ring ingress node.

103: Send the detection request packet after encapsulation to a ring egress node.

Specifically, before 103, the ring ingress node may further query a protocol layer of the ring LSP first, search for label mapping information corresponding to the ring LSP, acquire a label of the LSR corresponding to the ring ingress node address, and press the label into the detection request packet.

104: Determine whether a detection reply packet sent by the ring egress node is received; if yes, determine that the ring LSP is connected; otherwise, determine that the ring LSP is not connected.

If the ring egress node does not receive the detection request packet, the ring egress node is therefore not able to return a detection reply packet, and the ring ingress node is therefore not able to receive the detection reply packet sent by the ring egress node. In this case, it may be determined that the ring LSP is not connected.

If the ring egress node receives the detection request packet, and returns a detection reply packet to the ring ingress node, it may be determined that the ring LSP is connected.

This embodiment of the present invention uses the following technical means to determine whether a ring LSP is connected: A ring ingress node encapsulates an extended ring LSP FEC into a detection request packet, and sends the detection request packet after encapsulation to a ring egress node, so that the ring egress node returns a detection reply packet; if the ring ingress node receives the detection reply packet, it is determined that the ring LSP is connected; otherwise, it is determined that the ring LSP is not connected. As such, the problem of failing to accurately reflect connectivity of a ring LSP according to the detection method in the prior art is solved, and the connectivity of the ring LSP is able to be directly detected.

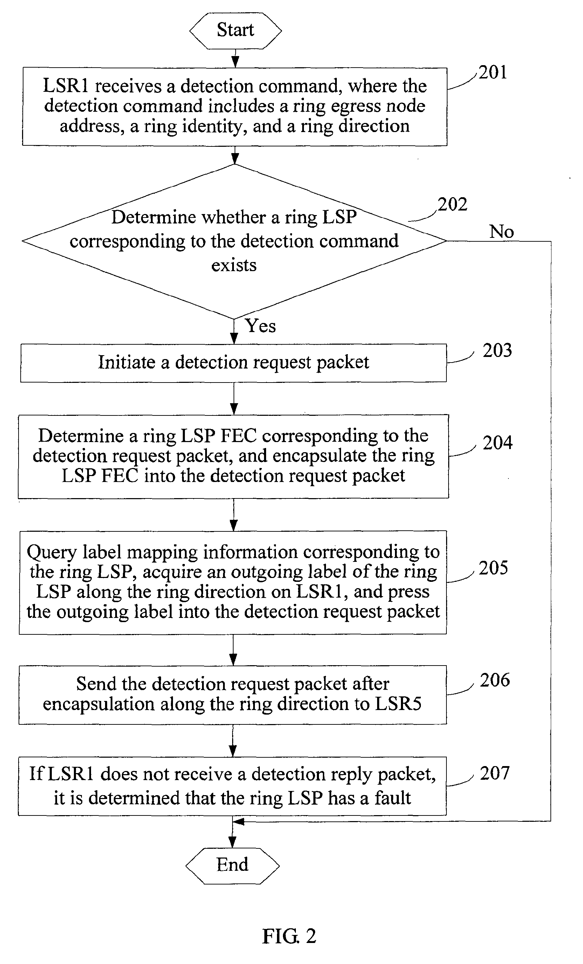

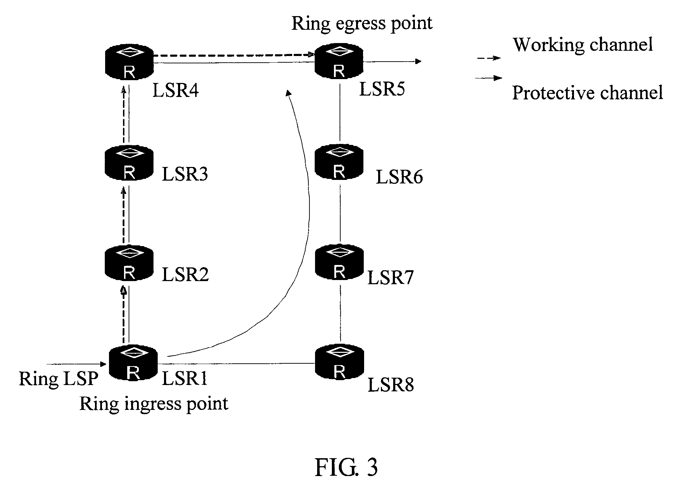

FIG. 2 is a schematic flowchart of a method for detecting a multi-protocol label switching ring network according to a second embodiment of the present invention. FIG. 3 is a system architecture diagram of a multi-protocol label switching ring network to which the embodiment of the present invention is specifically applied. As shown in FIG. 3, the ring LSP in this embodiment of the present invention is formed of 8 LSRs. Suppose that LSR1 is set as a ring ingress node and LSR5 is set as a ring egress node. As shown in FIG. 2, the method according to this embodiment includes the following:

201: LSR1 receives a detection command, where the detection command includes a ring egress node address, a ring identity, and a ring direction.

As an example, the detection command includes a Ping command and a Tracert command. Suppose that a user uses the Ping command to detect connectivity of the ring LSP. When entering the Ping command in the ring ingress node, the user may perform specific settings according to parameters of the Ping command.

For example, Ping LSP Ring ID Direction Destination-Node ID, where Ring ID is a ring LSP identity, Direction is a ring direction, which may be the clockwise direction Clockwise or the counterclockwise direction Counterclockwise, and Destination-Node ID is a target node address. In this embodiment, the target node address is identity of the ring egress node LSR5, that is, the ring egress node address. The case where the Tracert command is used is similar to the case where the Ping command is used, and is not described herein again.

202: Determine whether a ring LSP corresponding to the detection command exists; if yes, go to 203; if not, the flow ends.

In this embodiment, LSR1 searches the protocol layer of the ring LSP according to the ring identity included in the detection command. If the protocol layer of the ring LSP includes the ring LSP corresponding to the ring identity, the detected ring LSP is determined further according to the ring ingress node address, and the ring egress node address and ring direction included in the detection command. The ring ingress node address in this embodiment is the identity of the local ring ingress node LSR1.

203: Initiate a detection request packet.

Specifically, the detection request packet may be an echo request packet.

204: Determine a ring LSP FEC corresponding to the detection request packet, and encapsulate the ring LSP FEC into the detection request packet.

The value (Value) part in the ring LSP FEC in this embodiment uses the extended ring LSP FEC TLV structure in the first embodiment, and is not described herein again.

As an example, the ring LSP FEC specifically includes the ring ingress node address, that is, the LSR1 identity, the ring egress node address, that is, the LSR5 identity, and a ring identity.

The ring ingress node determines the ring LSP FEC corresponding to the detection request packet according to the ring ingress node address, and the ring egress node address, ring direction, and ring identity included in the detection command.

205: Query label mapping information corresponding to the ring LSP, acquire an outgoing label of the ring LSP along the ring direction on LSR1, and press the outgoing label into the detection request packet.

In this embodiment of the present invention, LSR1 determines the outgoing label of the ring LSP along the ring direction on LSR1 according to the ring identity and ring direction included in the detection request packet, and presses the outgoing label into the detection request packet.

206: Send the detection request packet after encapsulation along the ring direction to LSR5.

If the ring LSP is not faulty, the forwarding method for the detection request packet after encapsulation is specifically as follows:

The ring ingress node sends the detection request packet to a first intermediate node LSR2 after the ring ingress node LSR1; LSR2 searches the protocol layer of the ring LSP, acquires an outgoing label of LSR2, replaces the outgoing label of LSR1 with the outgoing label of LSR2, and then sends the detection request packet with the replaced label to a next node LSR3; LSR3 replaces the outgoing label of LSR2 in the received detection request packet with an outgoing label of LSR3, and sends the detection request packet to LSR4; LSR4 ejects the outgoing label in the detection request packet, and sends the detection request packet to the ring egress node LSR5.

LSR5 sends the received detection request packet to the control plane, and the control plane parses the detection request packet, which is specifically as follows: According to the ring identity included in the ring LSP FEC, querying the protocol layer of the ring LSP, and determining whether a ring LSP corresponding to the ring identity is the current ring LSP; if yes, further determining whether the LSP corresponding to the ring egress node address included in the ring LSP FEC is LSR5 that currently receives the detection request packet; if yes, instructing LSR5 to construct a detection reply packet, encapsulating the ring LSP FEC into the detection reply packet, and sending the detection reply packet after encapsulation to LSR1.

The detection reply packet in this embodiment complies with four response methods in RFC4379:

First method: no reply (no reply), which is used for detection of a unidirectional LSP.

This method is not commonly used. When a user sends a detection request packet at the ring ingress node, if the network management is able to detect, according to the detection request packet received by the ring egress node, whether the ring LSP is connected, the no reply method may be adopted. For example, when it can be determined, according to whether timeout (timeout) occurs when the ring egress node receives the detection request packet, whether a ring LSP is connected, and in this case the ring egress node may not return the detection reply packet.

Second method: user data protocol (User Data Protocol, UDP for short) packet reply. This method is a common method. The detection reply packet does not pass through the MPLS label switching (MPLS label switching) channel. That is, the detection reply packet does not need to undergo label switching, but passes through the IP protocol/UDP protocol packet reply channel. Therefore, as long as an IP protocol/UDP protocol packet reply channel exists between routers at the ring ingress node and ring egress node of the ring LSP, the detection reply packet is directly forwarded through the routers.

Third method: user data protocol with path alert option (UDP with Router Alert Option) packet reply. As long as an IP protocol/UDP protocol packet channel exists between routers at the ring ingress node and ring egress node of the ring LSP, the detection reply packet does not need to undergo label switching, but is directly forwarded through routers. The forwarding path for the detection reply packet is different from the forwarding path for the detection request packet.

Fourth method: application level control channel (Application Level Control Channel). Responding may be performed by acquiring reverse channel information through the ring ingress node address in the ring LSP FEC.

207: If LSR1 does not receive the detection reply packet, it is determined that the ring LSP has a fault.

In this embodiment, if any node between LSR1 and LSR5 has a fault, forwarding of the detection request packet fails. In this case, the detection request packet is dropped or reported to the control plane of the faulty node. LSR5 fails to receive the detection request packet, and LSR5 is not able to return a detection reply packet. Therefore, LSR1 fails to receive the detection reply packet, and it is determined that the ring LSP has a fault.

In the embodiment of the present invention, a ring ingress node initiates a detection request packet according to a detection command, an extended ring LSP FEC is encapsulated into the detection request packet, and the detection request packet after encapsulation is sent to a ring egress node, so that the ring egress node returns a detection reply packet, and if LSR1 does not receive the detection reply packet, it is determined that the ring LSP is not connected. This embodiment of the present invention is able to directly detect connectivity of the ring LSP.

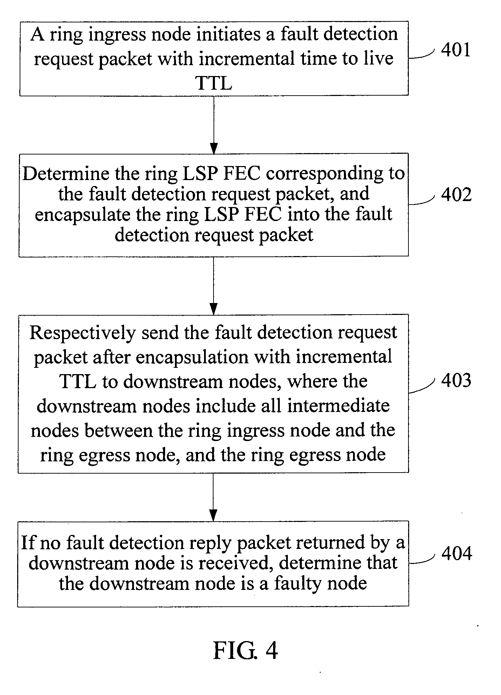

FIG. 4 is a schematic flowchart of a method for detecting a multi-protocol label switching ring network according to a third embodiment of the present invention, which specifically includes the following:

401: A ring ingress node initiates a fault detection request packet with incremental time to live TTL.

As an example, the ring ingress node initiates the fault detection request packet when receiving a label switching ring network fault detection command. The label switching ring network detection command may include, for example, a ring egress node address, a ring identity, and a ring direction. The ring direction includes a clockwise direction of the ring and a counterclockwise direction of the ring. The ring identity is used to determine the detected ring LSP.

402: Determine the ring LSP FEC corresponding to the fault detection request packet, and encapsulate the ring LSP FEC into the fault detection request packet.

The ring LSP FEC in this embodiment uses the extended ring LSP FEC TLV structure in the first embodiment, and is not described herein again.

403: Respectively send the fault detection request packet after encapsulation with incremental TTL to downstream nodes, where the downstream nodes include all intermediate nodes between the ring ingress node and the ring egress node, and the ring egress node.

404: If no fault detection reply packet returned by a downstream node is received, determine that the downstream node is a faulty node.

This embodiment of the present invention uses the following technical means to determine a faulty node: A ring ingress node encapsulates an extended ring LSP FEC into a fault detection request packet, and respectively sends the extended fault detection request packet with incremental TTL to downstream nodes, so that the downstream nodes return a fault detection reply packet; if a downstream node does not return a fault detection reply packet, it is determined that the downstream node is a faulty node, and therefore a faulty node in the ring LSP is able to be directly determined.

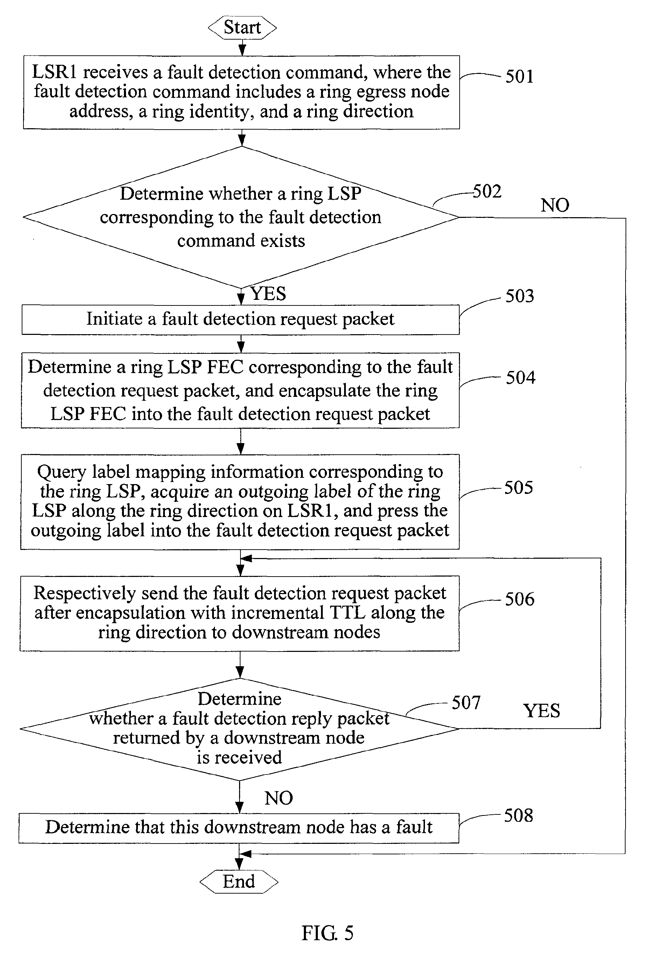

FIG. 5 is a schematic flowchart of a method for detecting a multi-protocol label switching ring network according to a fourth embodiment of the present invention. FIG. 3 is a system architecture diagram of the multi-protocol label switching ring network to which the embodiment of the present invention is specifically applied. As shown in FIG. 3 and FIG. 5, the method specifically includes the following:

501: LSR1 receives a fault detection command, where the fault detection command includes a ring egress node address, a ring identity, and a ring direction.

As an example, the fault detection command includes a Tracert command. Suppose that a user uses the Tracert command to detect a faulty node of the ring LSP. When entering the Tracert command in the ring ingress node, the user may perform specific settings according to parameters of the Tracert command.

For example, Tracert LSP Ring ID Direction Destination-Node ID, where Ring ID is a ring LSP identity, Direction is a ring direction, which may be a clockwise direction Clockwise or a counterclockwise direction Counterclockwise, and Destination-Node ID is a target node address. In this embodiment, the target node address is the identity of the ring egress node LSR5, that is, the ring egress node address.

502: Determine whether a ring LSP corresponding to the fault detection command exists; if yes, go to 503; if not, the flow ends.

In this embodiment, LSR1 searches the protocol layer of the ring LSP according to the ring identity. If the protocol layer of the ring LSP includes the ring LSP corresponding to the ring identity, it is determined that the ring LSP exists, and the detected ring LSP is further determined according to the ring ingress node address corresponding to the local ring ingress node, and the ring egress node address and ring direction in the fault detection command.

503: Initiate a fault detection request packet.

As an example, the fault detection request packet may be a Tracert echo request, and so on.

504: Determine a ring LSP FEC corresponding to the fault detection request packet, and encapsulate the ring LSP FEC into the fault detection request packet.

The ring LSP FEC in this embodiment uses the extended ring LSP FEC TLV structure in the first embodiment, and is not described herein again.

As an example, the ring LSP FEC may specifically include a ring ingress node address, that is, the LSR1 identity, a ring egress node address, that is, the LSR5 identity, and a ring identity.

The ring ingress node determines the ring LSP FEC corresponding to the fault detection request packet according to the ring ingress node address, and the ring egress node address, ring direction, and ring identity included in the fault detection command.

505: Query label mapping information corresponding to the ring LSP, acquire an outgoing label of the ring LSP along the ring direction on LSR1, and press the outgoing label into the fault detection request packet.

In this embodiment, LSR1 determines the outgoing label of the ring LSP along the ring direction on LSR1 according to the ring identity and ring direction included in the fault detection request packet, and presses the outgoing label into the detection request packet.

506: Respectively send the fault detection request packet after encapsulation with TTL along the ring direction to downstream nodes.

In this embodiment, the downstream nodes of LSR1 along the ring direction include LSR2, LSR3, LSR4, and LSR5.

The TTL value of the first fault detection request packet sent by LSR1 is 1. If the LSR2 node has a fault, LSR2 fails to receive the fault detection request packet, and LSR1 fails to receive a fault detection reply packet returned by LSR2. Therefore, it may be determined that the faulty node is LSR2.

If the LSR2 node does not have any fault, when LSR2 receives the fault detection request packet, the TTL value in the fault detection request packet is reduced by 1 to 0. At this time, LSR2 times out in processing the fault detection request packet. LSR2 sends the fault detection request packet to the control plane of LSR2. The control plane checks whether the ring LSP corresponding to the ring identity is the current ring LSP according to the ring LSP FEC. If yes, the control plane queries a downstream information mapping table of the ring LSP FEC to acquire downstream information of LSR2, which includes the address of the downstream node LSR3 and the outgoing label, encapsulates the downstream information of LSR2 into a fault detection reply packet, and returns the fault detection reply packet (Tracert echo reply) to LSR1. The fault detection reply packet includes information of LSR2 and information of LSR3. LSR1 determines, according to the returned information of LSR2 and information of LSR3, that the LSR2 node of the ring LSP has no fault, and determines that the next node of LSR2 is LSR3.

LSR1 sends a second fault detection request packet to LSR3. The TTL value of this packet is 2. After forwarding by LSR2, the TTL is reduced to 1. LSR2 forwards the fault detection request packet to LSR3. If the LSR3 node has a fault, LSR3 fails to receive the fault detection request packet. LSR1 fails to receive the fault detection reply packet returned by LSR3. Therefore, it may be determined that the faulty node is LSR3. If the LSR3 node has no fault, LSR3 receives the fault detection request packet, and continues to reduce TTL by 1. At this time, the TTL value is 0. Processing of the fault detection request packet by LSR3 times out, and the fault detection request packet is forwarded to the control plane of LSR3. The control plane checks whether a ring LSP corresponding to the ring identity is a current ring LSP according to the ring LSP FEC. If yes, the downstream information mapping table of the ring LSP FEC is queried to acquire downstream information of LSR3, that is, information of LSR4, and the information of LSR4 is encapsulated into a fault detection reply packet and sent to LSR1. The fault detection reply packet includes the information of LSR3 and information of LSR4. It is determined that the LSR3 node of the ring LSP has no fault, and it is determined that the next node of LSR3 is LSR4. 406 is repeated until a faulty node on the ring LSP is determined.

507: Determine whether the fault detection reply packet returned by a downstream node is received; if yes, determine that the downstream node has no fault, and return to 506; otherwise, go to 508.

508: Determine that this downstream node has a fault.

This embodiment of the present invention uses the fault detection command, encapsulates the extended ring LSP FEC into the fault detection request packet, respectively sends the fault detection request packet with incremental TTL after encapsulation from the ring ingress node to downstream nodes of the ring ingress node, determines that a downstream node is a faulty node if the ring ingress node does not receive the fault detection reply packet returned from the downstream node, and therefore this embodiment of the present invention is able to directly detect a faulty node of a ring LSP.

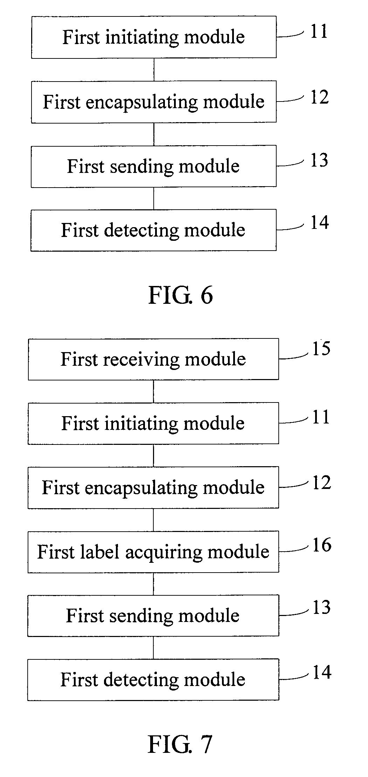

FIG. 6 is a schematic structural diagram of an apparatus for detecting a multi-protocol label switching ring network according to a fifth embodiment of the present invention, which includes:
a first initiating module 11, configured to initiate a detection request packet;

As an example, the first initiating module 11 initiates the detection request packet when a ring ingress node receives a label switching ring network detection command. The label switching ring network detection command may include, for example, a ring egress node address, a ring identity, and a ring direction. The ring direction includes a clockwise direction of the ring and a counterclockwise direction of the ring. The ring identity is used to determine a detected ring LSP.
a first encapsulating module 12, configured to determine a ring LSP forwarding equivalence class FEC corresponding to the detection request packet, and encapsulate the ring LSP FEC into the detection request packet;
a first sending module 13, configured to send the detection request packet after encapsulation to a ring egress node; and
a first detecting module 14, configured to determine whether a detection reply packet sent by the ring egress node is received; if yes, determine that the ring LSP is connected; otherwise, determine that the ring LSP is not connected.

The detection apparatus according to this embodiment of the present invention may be specifically configured to execute the method of the method embodiment shown in FIG. 1, and the implementation principles and technical effects thereof are similar, and are not described herein again.

FIG. 7 is a schematic structural diagram of an apparatus for detecting a multi-protocol label switching ring network according to a sixth embodiment of the present invention, and is a further extension on the basis of the apparatus shown in FIG. 6. The apparatus further includes: a first receiving module 15, configured to receive a detection command, where the detection command includes a ring identity, a ring direction, and a ring egress node address.

The first initiating module 11 is further configured to initiate a detection request packet according to the detection command received by the first receiving module 15.

As an example, the first receiving module 15 may further include a Ping detection command receiving sub module and/or a Tracert detection command receiving sub module.

As an example, the apparatus for detecting the multi-protocol label switching ring network further includes a ring LSP determining module, configured to determine whether the ring LSP corresponding to the detection command exists.

The first initiating module 11 is further configured to initiate a detection request packet according to the detection command received by the first receiving module 15 when the ring LSP determining module determines that the ring LSP corresponding to the detection command exists.

The apparatus for detecting the multi-protocol label switching ring network further includes a first label acquiring module 16, configured to query label mapping information corresponding to the ring LSP, acquire an outgoing label on the ring ingress node along the ring direction, and press the outgoing label into the detection request packet.

The detection apparatus according to this embodiment of the present invention may be specifically configured to execute the method for detecting a multi-protocol label switching ring network provided in the second embodiment shown in FIG. 2, and the implementation principles and technical effects thereof are similar, and are not described herein again.

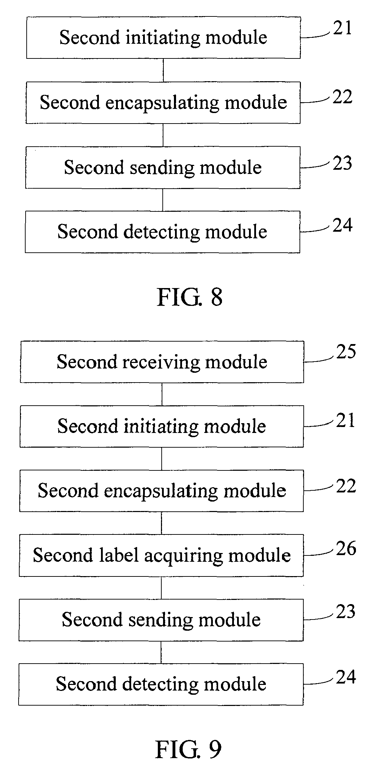

FIG. 8 is a schematic structural diagram of an apparatus for detecting a multi-protocol label switching ring network according to a seventh embodiment of the present invention, which includes:
a second initiating module 21, configured to initiate a fault detection request packet with incremental time to live TTL;
a second encapsulating module 22, configured to determine a ring LSP FEC corresponding to the fault detection request packet, and encapsulate the ring LSP FEC into the fault detection request packet;
a second sending module 23, configured to respectively send the fault detection request packet after encapsulation with incremental TTL to downstream nodes, where the downstream nodes include intermediate nodes between a ring ingress node and a ring egress node, and the ring egress node; and
a second detecting module 24, configured to: if no fault detection reply packet returned by a downstream node is received, determine that the downstream node is a faulty node.

The detection apparatus according to this embodiment of the present invention may be specifically configured to execute the method of the method embodiment shown in FIG. 4, and the implementation principles and technical effects thereof are similar, and are not described herein again.

FIG. 9 is a schematic structural diagram of an apparatus for detecting a multi-protocol label switching ring network according to an eighth embodiment of the present invention, and is a further extension on the basis of the apparatus shown in FIG. 8. The apparatus further includes:
a second receiving module 25, configured to receive a fault detection command, where the fault detection command includes a ring identity, a ring direction, and a ring egress node address; and
a second label acquiring module 26, configured to: query label mapping information corresponding to the ring LSP, acquire an outgoing label on the ring ingress node along the ring direction, and press the outgoing label into the fault detection request packet.

The detection apparatus according to this embodiment of the present invention may be specifically configured to execute the method of the method embodiment shown in FIG. 5, and the implementation principles and technical effects thereof are similar, and are not described herein again.

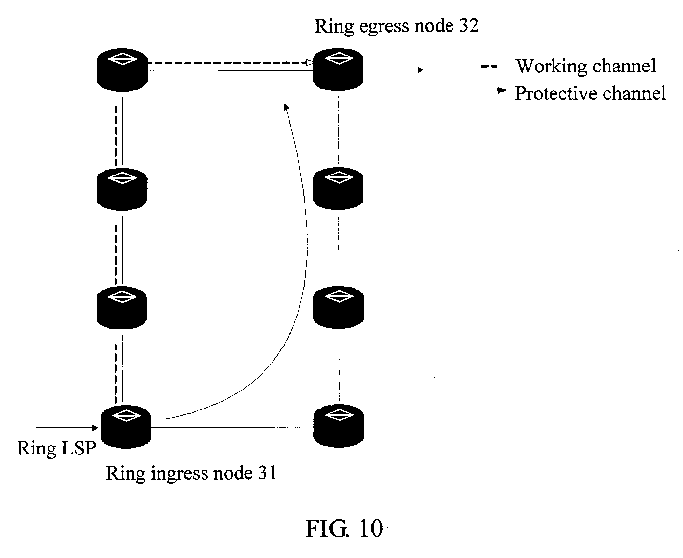

FIG. 10 shows a system for detecting a multi-protocol label switching ring network according to a ninth embodiment of the present invention, which includes a ring ingress node 31, and a ring egress node 32 that communicates with the ring ingress node 31;
where, the ring ingress node 31 uses the apparatus for detecting a multi-protocol label switching ring network of the embodiment shown in FIG. 6 or FIG. 7; and
the ring egress node 32 is configured to: receive a detection request packet after encapsulation sent by the ring ingress node 31, and determine, according to a ring identity included in the detection request packet, whether a ring LSP along the ring direction between the ring ingress node and the ring egress node is a ring LSP corresponding to the ring identity; if yes, further determine, according to a ring egress node address included in the detection request packet, whether the ring egress node 32 is a ring egress node corresponding to the ring egress node address; if yes, encapsulate the ring LSP FEC into a detection reply packet, and send the detection reply packet after encapsulation to the ring ingress node 31.

The detection system according to this embodiment of the present invention may be specifically configured to execute the method of the method embodiment shown in FIG. 1 or FIG. 2, and the implementation principles and technical effects thereof are similar, and are not described herein again.

A tenth embodiment of the present invention provides a system for detecting a multi-protocol label switching ring network. On the basis of the detection system according to the embodiment shown in FIG. 10, the system further includes: all intermediate nodes along the ring direction between a ring ingress node 31 and a ring egress node 32;
where, the ring ingress node 31 uses the apparatus for detecting a multi-protocol label switching ring network in the embodiment shown in FIG. 8 or FIG. 9;
all the intermediate nodes along the ring direction between the ring ingress node 31 and the ring egress node 32 are configured to receive a fault detection request packet after encapsulation with incremental TTL sent by the ring ingress node 31, and determine, according to a ring identity included in the fault detection request packet, whether a ring LSP along the ring direction between the ring ingress node and the ring egress node is a ring LSP corresponding to the ring identity; if yes, encapsulate the ring LSP FEC and downstream node information of the intermediate nodes into a fault detection reply packet, and send the fault detection reply packet after encapsulation to the ring ingress node 31; and
the ring egress node 32 is further configured to: receive the fault detection request packet after encapsulation sent by the ring ingress node 31, and determine, according to the ring identity included in the fault detection request packet, whether a ring LSP along the ring direction between the ring ingress node and the ring egress node is a ring LSP corresponding to the ring identity; if yes, further determine, according to the ring egress node address included in the fault detection request packet, whether the ring egress node 32 is a ring egress node corresponding to the ring egress node address; if yes, encapsulate the ring LSP FEC into a fault detection reply packet, and send the fault detection reply packet after encapsulation to the ring ingress node 31.

The detection system according to this embodiment of the present invention may be specifically configured to execute the methods of the method embodiments in FIG. 2 and FIG. 4, and the implementation principles and technical effects thereof are similar, and are not described herein again.

It is understandable to those skilled in the art that all or certain steps in the preceding embodiments of the present invention may be performed by instructing related hardware through a program. The program may be stored in a computer readable storage medium. When being executed, the program performs the steps in the preceding embodiments of the present invention. The storage medium may be ROM, RAM, magnetic disk, or compact disc-read only memory that is able to store program codes.

The preceding embodiments are intended to describe the technical solutions revealed in the present invention but not to confine the invention. It is understandable to those skilled in the art that modifications or equivalent replacements may be made on the technical solutions provided in embodiments of the present invention without departing from the scope of the technical solutions provided in the present invention.

## Claims

1. A method for detecting a multi-protocol label switching ring network, comprising:
initiating, by a ring ingress node, a detection request packet;
determining a ring label switched path LSP forwarding equivalence class FEC corresponding to the detection request packet, and encapsulating the ring LSP FEC into the detection request packet;
sending the detection request packet after encapsulation to a ring egress node; and
determining whether a detection reply packet sent by the ring egress node is received; if yes, determining that the ring LSP is connected; otherwise, determining that the ring LSP is not connected.

2. The method according to claim 1, wherein before the initiating, by the ring ingress node, the detection request packet, the method further comprises:
receiving, by the ring ingress node, a detection command, wherein the detection command comprises a ring identity, a ring direction, and a ring egress node address.

3. The method according to claim 1 or 2, wherein the determining the ring label switched path LSP forwarding equivalence class FEC corresponding to the detection request packet specifically comprises:
according to a ring ingress node address, and the ring identity and the ring egress node address comprised in the detection command, determining the ring label switched path LSP forwarding equivalence class FEC corresponding to the detection request packet, wherein the ring label switched path LSP forwarding equivalence class FEC comprises the ring ingress node address, the ring egress node address, and ring identity.

4. The method according to any one of claims 1 to 3, wherein before the sending the detection request packet after encapsulation to the ring egress node, the method comprises:
querying label mapping information corresponding to the ring LSP, acquiring an outgoing label along the ring direction on the ring ingress node, and pressing the outgoing label into the detection request packet.

5. The method according to any one of claims 1 to 4, wherein the sending the detection request packet after encapsulation to the ring egress node specifically comprises: sending the detection request packet after encapsulation along the ring direction to the ring egress node.

6. A method for detecting a multi-protocol label switching ring network, comprising:
initiating, by a ring ingress node, a fault detection request packet with incremental time to live TTL;
determining a ring LSP FEC corresponding to the fault detection request packet, and encapsulating the ring LSP FEC into the fault detection request packet;
respectively sending the fault detection request packet after encapsulation with incremental TTL to downstream nodes, wherein the downstream nodes comprise all intermediate nodes between the ring ingress node and a ring egress node, and the ring egress node; and
if no fault detection reply packet returned by a downstream node is received, determining that the downstream node is a faulty node.

7. The method according to claim 6, wherein before the initiating, by the ring ingress node, the fault detection request packet with incremental time to live TTL, the method further comprises:
receiving, by the ring ingress node, a fault detection command, wherein the fault detection command comprises a ring identity, a ring direction, and the ring egress node address.

8. The method according to claim 6 or 7, wherein the determining the ring LSP FEC corresponding to the fault detection request packet specifically comprises:
according to a ring ingress node address, and the ring identity and the ring egress node address comprised in the fault detection command, determining the ring LSP FEC corresponding to the fault detection request packet, wherein the ring LSP FEC comprises the ring ingress node address, the ring egress node address, and the ring identity.

9. The method according to any one of claims 6 to 8, wherein before the respectively sending the fault detection request packet after encapsulation with incremental TTL to the downstream nodes, the method comprises:
querying label mapping information corresponding to the ring LSP, acquiring an outgoing label along the ring direction on the ring ingress node, and pressing the outgoing label into the fault detection request packet.

10. The method according to any one of claims 6 to 9, wherein the respectively sending the fault detection request packet after encapsulation with incremental TTL to the downstream nodes, wherein the downstream nodes comprise all the intermediate nodes between the ring ingress node and the ring egress node, and the ring egress node, specifically comprises: respectively sending the fault detection request packet after encapsulation with incremental TTL, along the ring direction to the downstream nodes, wherein the downstream nodes comprise all intermediate nodes along the ring direction between the ring ingress node and the ring egress node, and the ring egress node.

11. An apparatus for detecting a multi-protocol label switching ring network, comprising:
a first initiating module, configured to initiate a detection request packet;
a first encapsulating module, configured to determine a ring label switched path LSP forwarding equivalence class FEC corresponding to the detection request packet, and encapsulate the ring LSP FEC into the detection request packet;
a first sending module, configured to send the detection request packet after encapsulation to a ring egress node; and
a first detecting module, configured to determine whether a detection reply packet sent by the ring egress node is received; if yes, determine that the ring LSP is connected; otherwise, determine that the ring LSP is not connected.

12. The apparatus according to claim 11, further comprising: a first receiving module, configured to receive a detection command, wherein the detection command comprises a ring identity, a ring direction, and a ring egress node address.

13. The apparatus according to claim 11 or 12, further comprising: a first label acquiring module, configured to query label mapping information corresponding to the ring LSP, acquire an outgoing label along the ring direction on a ring ingress node, and press the outgoing label into the detection request packet.

14. An apparatus for detecting a multi-protocol label switching ring network, comprising:
a second initiating module, configured to initiate a fault detection request packet with incremental time to live TTL;
a second encapsulating module, configured to determine a ring LSP FEC corresponding to the fault detection request packet, and encapsulate the ring LSP FEC into the fault detection request packet;
a second sending module, configured to respectively send the fault detection request packet after encapsulation with incremental TTL to downstream nodes, wherein the downstream nodes comprise all intermediate nodes between a ring ingress node and a ring egress node, and the ring egress node; and
a second detecting module, configured to: if no fault detection reply packet returned by a downstream node is received, determine that the downstream node is a faulty node.

15. The apparatus according to claim 14, further comprising: a second receiving module, configured to receive a fault detection command, wherein the fault detection command comprises a ring identity, a ring direction, and a ring egress node address.

16. The apparatus according to claim 14 or 15, further comprising: a second label acquiring module, configured to query label mapping information corresponding to the ring LSP, acquire an outgoing label along the ring direction on the ring ingress node, and press the outgoing label into the fault detection request packet.

17. A system for detecting a multi-protocol label switching ring network, comprising: a ring ingress node, and a ring egress node that communicates with the ring ingress node;
wherein, the ring ingress node comprises the apparatus for detecting a multi-protocol label switching ring network according to any one of claims 11 to 13; and
the ring egress node is configured to: receive a detection request packet after encapsulation sent by the ring ingress node, and determine, according to a ring identity comprised in a ring LSP FEC, whether a ring LSP along a ring direction between the ring ingress node and the ring egress node is a ring LSP corresponding to the ring identity; if yes, further determine, according to a ring egress node address comprised in the ring LSP FEC, whether the ring egress node is a ring egress node corresponding to the ring egress node address; if yes, encapsulate the ring LSP FEC into a detection reply packet, and send the detection reply packet after encapsulation to the ring ingress node.

18. A system for detecting a multi-protocol label switching ring network, comprising: a ring ingress node, a ring egress node that communicates with the ring ingress node, and all intermediate nodes along a ring direction between the ring ingress node and the ring egress node;
wherein, the ring ingress node comprises the apparatus for detecting a multi-protocol label switching ring network according to any one of claims 14 to 16;
the intermediate nodes are configured to: receive a fault detection request packet after encapsulation with incremental TTL sent by a ring ingress node, and determine, according to a ring identity comprised in a ring LSP FEC, whether a ring LSP along a ring direction between the ring ingress node and a ring egress node is a ring LSP corresponding to the ring identity; if yes, encapsulate the ring LSP FEC and downstream node information of the intermediate nodes into a fault detection reply packet, and send the fault detection reply packet after encapsulation to the ring ingress node; and
the ring egress node is configured to: receive the fault detection request packet after encapsulation sent by the ring ingress node, and determine, according to the ring identity comprised in the ring LSP FEC, whether a ring LSP along the ring direction between the ring ingress node and the ring egress node is a ring LSP corresponding to the ring identity; if yes, further determine, according to a ring egress node address comprised in the ring LSP FEC, whether the ring egress node is a ring egress node corresponding to the ring egress node address; if yes, encapsulate the ring LSP FEC into the fault detection reply packet, and send the fault detection reply packet after encapsulation to the ring ingress node.
